# EUROPEAN PATENT SPECIFICATION

(11) **EP 1 020 749 B1**
(45) Date of publication and mention of the grant of the patent: **18.02.2009**
(21) Application number: 98945563.9
(22) Date of filing: 01.10.1998
(51) Int. Cl.: G02B 6/12

(54) **OPTICAL WAVEGUIDE WITH MICROMIRROR, ITS MANUFACTURING METHOD, AND OPTICAL INFORMATION PROCESSOR**
OPTISCHER WELLENLEITER MIT MIKROSPIEGEL, SEIN HERSTELLUNGSVERFAHREN, UND OPTISCHER SIGNALPROZESSOR
GUIDE D'ONDES OPTIQUES AVEC MICROMIROIR, SON PROCEDE DE FABRICATION ET UNITE DE TRAITEMENT D'INFORMATIONS OPTIQUES

(30) Priority: 01.10.1997 JP 26900197; 01.10.1997 JP 26900297; 28.01.1998 JP 1612298
(43) Date of publication of application: 19.07.2000
(73) Proprietor: Hitachi Chemical Company, Ltd., Tokyo 163-0449 (JP); Koyanagi, Mitsumasa, Natori-shi, Miyagi-ken 981-1245 (JP)
(72) Inventor: KOYANAGI, Mitsumasa, Natori-shi, Miyagi-ken 981-1245 (JP); KUWANA, Yasuhiro, Hitachi Chemical Co, Ltd., Tsukuba-shi, Ibaraki-ken 300-4247 (JP); HONDA, Yutaka, Hitachi Chemical Co, Ltd., Tsukuba-shi, Ibaraki-ken 300-4247 (JP); MIYADERA, Nobuo, Hitachi Chemical Co, Ltd., Tsukuba-shi, Ibaraki-ken 3004247 (JP)
(74) Representative: Jönsson, Hans-Peter
(86) International application number: PCT/JP1998/004433
(87) International publication number: WO 1999/017143

(56) References cited:
- JP-A- 2 108 023
- JP-A- 7 183 570
- JP-A- 9 145 934
- JP-U- 59 101 217
- US-A- 5 170 448
- OPTOELECTRONIC INTERCONNECTS AND PACKAGING, Vol. RC62, (1996), MITSUMASA KOYANAGI, "Optical Interconnection Using Polyimide Waveguide for Multi-Chip Module", p. 329-342, XP002915068.
- HIROSHI NISHIHARA et al., "Optical Integrated Circuit (Revised and Enlarged Edition) (in Japanese)", (Japan), 20 May 1993, K.K. OMUSHA, pages 198-203.
- YOKOYAMA ET AL.: "Optical waveguides on silicon chips" JOURNAL OF VACCUM SCIENCE AND TECHNOLOGY A, vol. 13, no. 3, 1995, pages 629-635, XP000531568

## Description

### Technical Field

The present invention relates to an optical waveguide to be used for connecting integrated circuits, a manufacturing method thereof, and an optical information processing apparatus that propagates an optical signal through the optical wave.

### Background Art

A technique of optical interconnection (internal optical coupling), in which, in order to transmit and receive a signal between a plurality of integrated circuits, an electric signal is once converted into an optical signal and the optical signal is transmitted and received, is disclosed in a document, Jpn. J. Appl. Phys. Vol. 36 (1997) pp. 1903 - 1906. The document discloses structure in which an electric signal is propagated through an optical waveguide on a substrate. In this structure, a light emitting diode and a photodetector are provided to an LSI substrate for conversion between an electric signal and an optical signal, and this LSI substrate is mounted on a substrate in which an optical waveguide is formed. The optical signal that propagates through the optical waveguide is deflected by a micro mirror provided within the optical waveguide into a perpendicular direction to the substrate surface so as to be emitted from the optical waveguide. This optical signal is received by the photodetector on the LSI substrate. Further, an optical signal emitted from the light emitting diode toward the optical waveguide is deflected by the micro mirror provided within the optical waveguide into the propagating direction in the optical waveguide, so as to propagate through the optical waveguide. As the micro mirror provided within the optical waveguide, a mountain-shaped aluminum mirror formed on a lower surface of the waveguide is used. Light is reflected by an inclined surface of the mountain-shaped aluminum mirror so as to be deflected.

However, an efficient method of manufacturing a micro mirror within an optical waveguide has not been known up to now.

Further, in the case of arranging micro mirrors in multiple stages within an optical wave guide, intensity of light reflected by a micro mirror in a later stage is reduced owing to propagation loss.

Further, in the above-described optical interconnection system, input and output signals of an LSI are converted into optical signals, and accordingly, they can be transmitted through an optical waveguide, while the power-supply voltage should still be supplied to the LSI, light emitting diodes, and photodetectors. This causes a problem of where lines for supplying power-supply voltage should be arranged.

Yokoyama et al. (J. Vac. Sci. Technol. A 13(3), 1995, pp. 629-635**) discloses optical waveguides on silicon chips with salients made of aluminium.**

### Disclosure of the Invention

The object of the present invention is to provide an optical waveguide in which multistage micro mirrors are provided to receive/emit propagated light downward/upward by/from a substrate surface, and intensity of light reflected by a micro mirror in a later stage can be held in a certain degree or more.

In order to attain the above-mentioned object, the present invention provides a following optical waveguide; namely
an optical waveguide comprising:
a substrate (10) having a flat top face;
a clad layer (21) provided on said substrate (10) and having a flat top face;
a salient (15) with an inclined side face provided on the top face of said clad layer;
an optical waveguide layer (14) provided on said clad layer (21) and said salient (15); and
a reflecting film (822) provided between the inclined side face of said salient (15) and said optical waveguide layer (14);
wherein said salient (15) and said optical waveguide layer (14) are formed of the same material.

### Brief Description of Drawings

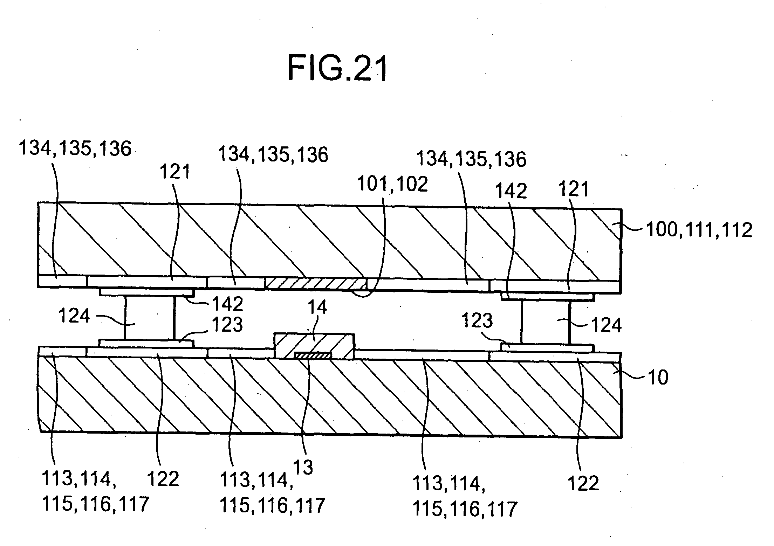

Fig. 21 is a cross section showing connecting structure between the substrate 10 and the substrate 100 etc. in the optical information processing system of Fig. 19;

Fig. 28 is a top view for explaining construction of an optical waveguide provided with micro mirrors, according to a seventh embodiment of the present invention;

Fig. 29 is a cross section along the line D - D' of Fig. 28;

Fig. 31 is a top view showing construction of the optical waveguide provided with the micro mirrors of the seventh embodiment, when widths of the salients are made larger than width of the optical waveguide 14;

### Best Mode for Carrying Out the Invention

An embodiment of the present invention will be described in the following, referring to the drawings.

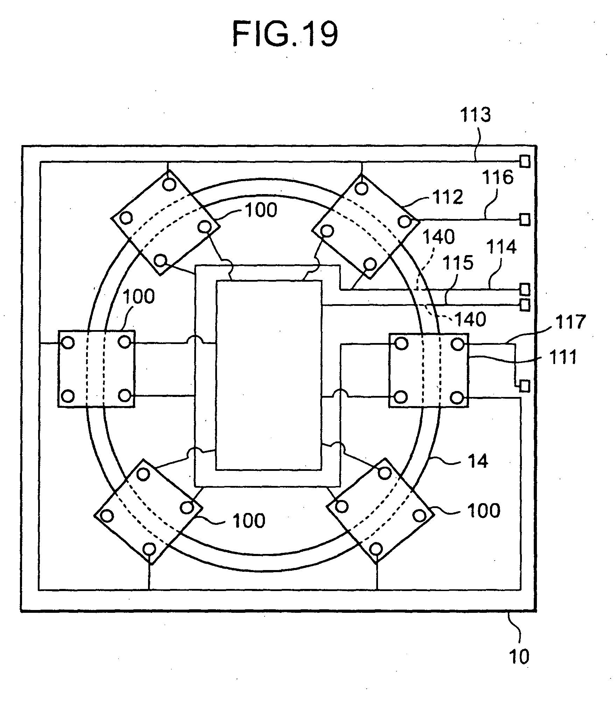

According to an embodiment, in order to keep quantity of reflected light constant at each micro mirror, quantity of reflected light is adjusted to be constant depending on attenuance of light arriving at each micro mirror. In detail, a micro mirror close to the incident point of the light is formed smaller, and a micro mirror is formed larger as it is more distant from the incident point. In the case of the optical waveguide for which sizes of the micro mirrors are adjusted as described, it is possible to make the quantity of light that originally enters into the optical waveguide 14 smaller, while making the quantity of reflected light at each micro mirror is made to be more than the requirement of the sensitivity of the photodetector. Thus, for example, application of this arrangement to the optical multi-chip module as shown in Fig. 19 can reduce power consumption.

In order to keep the quantity of reflected light constant at each micro mirror, it is sufficient that an area of a mirror is made smaller for a mirror of larger arrival quantity of light and an area of a mirror is made larger for a mirror of smaller arrival quantity of light. When the intervals between the micro mirrors are set equal, and each micro mirror has the same structure except for its area, then geometrically-progressively increased areas of the micro mirrors can realize the condition that quantity of reflected light is constant.

Geometrically-progressively changing areas of the micro mirrors can be realized by changing the widths of the mirrors geometrically (a geometric ratio = W₂/W₁ = W₃/W₂ = ... = Wₙ/Wₙ₋₁) while keeping the heights of the mirrors constant. In that case, it is preferable that the height of the mirrors is smaller. The height of the mirrors is favorably 5 - 20 % of the height of the optical waveguide 14.

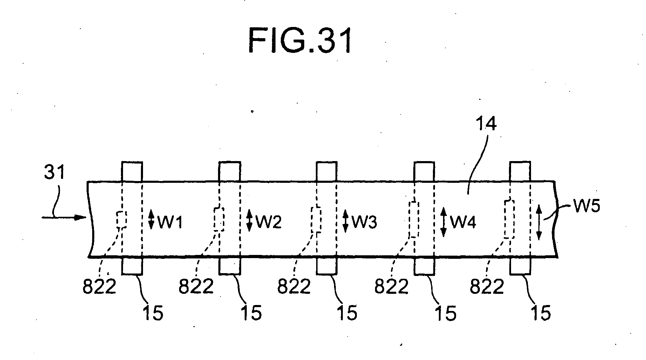

The geometrically-progressive area change of the micro mirrors can be realized by making the salients 15 wider than the optical waveguide 14 as shown in Fig. 31, and by changing only the areas of the parts of the aluminum films 822 as reflecting films.

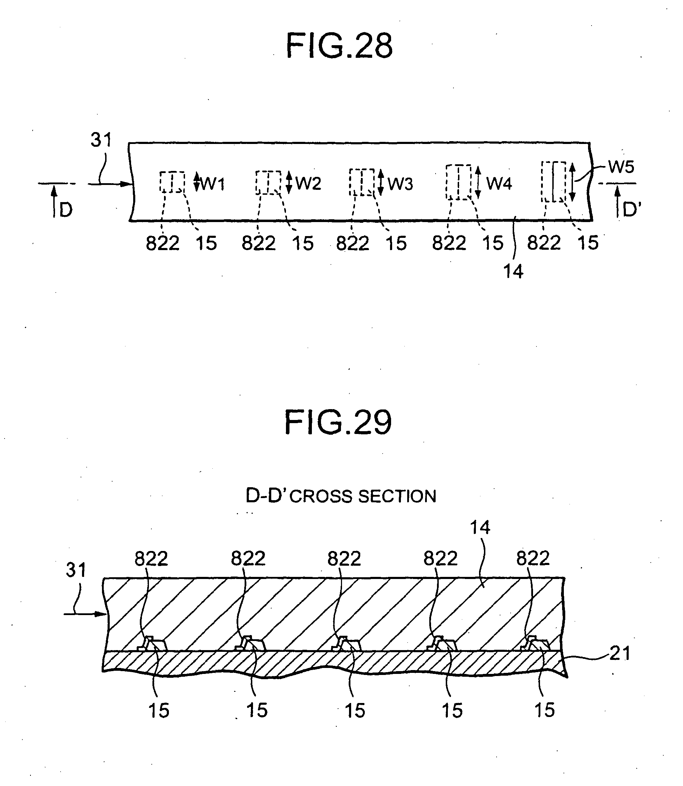

Also, the geometrically-progressive area change of the micro mirrors can be realized by changing the widths of the salients 15 as shown in Fig. 28, so as to adjust the areas of the reflecting films. This arrangement is favorable, since attenuation of an optical signal does not exist at the required salients 15, thus reducing the loss at the micro mirror portions. As described, it is preferable that the micro mirrors are contained in the inside of the optical waveguide 14. Taking the margin of lithography into consideration, it is preferable that the end portion of the core is distant from the end portion of the mirror by more than or equal to 2 µm.

Preferably, the length of the salient 15 to form the micro mirror is 5 - 200 µm from the margin of lithography, seen in the direction of the propagation of an optical signal.

Also, geometrically-progressively changing areas of the micro mirrors can be realized by changing the heights of the mirrors geometrically, maintaining the width of the mirrors constant.

Preferably, the length of the reflecting films such as aluminum films 822 is 2 - 20 µm in the direction of the propagation of an optical signal. Too long aluminum film 822 acts as metal cladding, and as a result, invites excessive loss, while too short aluminum film makes lithography difficult.

The size of the optical waveguide 14 is suitably 10 - 50 µm in width, and 5 - 20 µm in height. The optical waveguide 14 of too large size makes it impossible to obtain uniform intensity of the guided wave, since propagation modes increase too much. Here, organic material, for example polyimide, may be used as the material of the optical waveguide 14.

Further, constant quantity of reflected light means substantial constancy. Namely, it is sufficient if the quantity of reflected light is constant to such a degree that, when an optical signal kicked up by each micro mirror enters into the photodetector 101 mounted above the mirror, the optical signal does not become less than the detection sensitivity for any photodetector 101, and at the same time, the quantity of light originally entered into the optical waveguide 14 is not excessive.

Further, the shape of the inclined surface of the salient constituting the micro mirror may be any of flat, concave and convex surfaces. By selecting the shape of the flat, concave or convex surface depending on an object, it is possible to additionally produce an effect of converging or diffusing.

The angle of the inclined surface of the salient 15 constituting the micro mirror may be any within the range of 0 - 90°. Further, the figures show the constructions in which light is deflected upward. However, direction of deflection may be any of upward, downward and laterally directions. That direction can be decided taking the mounting position, mounting direction, etc. of the photodetector into consideration.

The procedure of forming the salients 15 constituting the micro mirrors as shown in Figs. 28, 29 will be described simply. First, after forming the flat lower clad 21 on the flat substrate, a film of the same material as the optical waveguide 14 is formed on that lower clad. This film is etched into taper shapes by means of isotropic etching or the like, so as to form the salients 15. By forming aluminum films 822 on those salients 15, and thereafter, the optical waveguide 14 is formed. This method is preferable because excessive loss is not produced even if the salients 15 constituting the micro mirrors are formed to stick out of the optical waveguide 14.

The upper surface of the lower clad formed by this method becomes flat.

In the optical waveguide 14 of the embodiment, it is possible to suppress decrease of kicked-up quantity of light by making a mirror smaller at a position closer to the incident point, and larger at a more distant position. Further, by making the sizes of the mirrors larger than corresponding decrease of quantity of propagated light, it is also possible to increase kicked-up quantity of light by certain quantity, with ease. Accordingly, it is possible to kick up more quantity of light than the threshold of the photodetector 101, and thus, it is possible to increase the number of stages in which micro mirrors can be arranged in the optical waveguide 14.

As described above, the present invention can provide a manufacturing method that can easily fabricate an optical waveguide provided with micro mirrors inside it, for receiving and emitting propagated light upward from the substrate.

### Industrial Applicability

As described above, the manufacturing method of an optical waveguide provided with micro mirrors according to the present invention is advantageous to efficiently manufacturing an optical waveguide provided with micro mirrors. Further, the optical waveguide provided with micro mirrors according to the present invention is advantageous as an optical waveguide propagating an optical signal in an optical information processing apparatus. Further, the optical information processing apparatus according to the present invention can process information by means of an optical signal, and accordingly, it is advantageous as an information processing apparatus of a high processing speed

## Claims

1. An optical waveguide comprising:
a substrate **(10)** having a flat top face;
a clad layer **(21)** provided on said substrate **(10)** and having a flat top face;
a salient (15) with an inclined side face provided on the top face of said clad layer;
an optical waveguide layer **(14)** provided on said clad layer **(21)** and said salient **(15);** and
a reflecting film **(822)** provided between the inclined side face of said salient **(15)** and said optical waveguide layer **(14);**
wherein said salient **(15)** and said optical waveguide layer **(14)** are formed of the same material.

2. An optical waveguide according to claim 1, wherein a width of said salient **(15)** is greater that that of said waveguide layer **(14).**

3. An optical waveguide according to claim 1 or 2, wherein said reflecting film **(822)** is a metal film or a dielectric film.

4. An optical waveguide according to claim 1 or 2, wherein said reflecting film **(822)** is an aluminum film **(822).**

5. An optical waveguide according to claim 1 or 2, wherein said reflecting film **(822)** is a film made of Cr, Cu, Au or Ag.

6. An optical waveguide according to claim 1 or 2, wherein said salient **(15)** and said optical waveguide layer **(14)** are each made of a resin.

## Patentansprüche

1. Lichtwellenleiter, umfassend:
ein Substrat (10) mit einer flachen oberen Fläche;
eine Mantelschicht (21), die auf dem Substrat (10) angeordnet ist und eine flache obere Fläche aufweist;
einen Vorsprung (15) mit einer geneigten Seitenfläche, der auf der oberen Fläche der Mantelschicht angeordnet ist;
eine Lichtwellenleiterschicht (14), die auf der Mantelschicht (21) und dem Vorsprung (15) angeordnet ist; und
eine reflektierende Schicht (822), die zwischen der geneigten Seitenfläche des Vorsprungs (15) und der Lichtwellenleiterschicht (14) angeordnet ist;
wobei der Vorsprung (15) und die Lichtwellenleiterschicht (14) aus demselben Material bestehen.

2. Lichtwellenleiter gemäß Anspruch 1, wobei die Breite des Vorsprungs (15) größer ist als die Breite der Wellenleiterschicht (14).

3. Lichtwellenleiter gemäß Anspruch 1 oder 2, wobei die reflektierende Schicht (822) eine Metallschicht oder eine dielektrische Schicht ist.

4. Lichtwellenleiter gemäß Anspruch 1 oder 2, wobei die reflektierende Schicht (822) eine Aluminiumschicht (822) ist.

5. Lichtwellenleiter gemäß Anspruch 1 oder 2, wobei die reflektierende Schicht (822) eine Schicht aus Cr, Cu, Au oder Ag ist.

6. Lichtwellenleiter gemäß Anspruch 1 oder 2, wobei der Vorsprung (15) und die Lichtwellenleiterschicht (14) jeweils aus einem Harz bestehen.

## Revendications

1. Guide d'ondes optique comprenant :
un substrat (10) ayant une face supérieure plate ;
une couche de revêtement (21) prévue sur ledit substrat (10) et ayant une face supérieure plate ;
une saillie (15) ayant une face latérale inclinée prévue sur la face supérieure de ladite couche de revêtement ;
une couche de guide d'ondes optique (14) prévue sur ladite couche de revêtement (21) et ladite saillie (15) ; et
un film réfléchissant (822) prévu entre la face latérale inclinée de ladite saillie (15) et ladite couche de guide d'ondes optique (14) ;
dans lequel ladite saillie (15) et ladite couche de guide d'ondes optique (14) sont formées du même matériau.

2. Guide d'ondes optique selon la revendication 1, dans lequel une largeur de ladite saillie (15) est supérieure à celle de ladite couche de guide d'ondes (14).

3. Guide d'ondes optique selon la revendication 1 ou 2, dans lequel ledit film réfléchissant (822) est un film métallique ou un film diélectrique.

4. Guide d'ondes optique selon la revendication 1 ou 2, dans lequel ledit film réfléchissant (822) est un film d'aluminium (822).

5. Guide d'ondes optique selon la revendication 1 ou 2, dans lequel ledit film réfléchissant (822) est un film composé de Cr, de Cu, de Au ou de Ag.

6. Guide d'ondes optique selon la revendication 1 ou 2, dans lequel ladite saillie (15) et ladite couche de guide d'ondes optique (14) sont chacune composées d'une résine.
